# EUROPÄISCHE PATENTANMELDUNG

(11) **EP 4 733 130 A1**
(43) Veröffentlichungstag der Anmeldung: **29.04.2026**
(21) Anmeldenummer: 25211174.5
(22) Anmeldetag: 24.10.2025
(51) Int. Cl.: B60L 58/26, B60H 1/00, B60K 11/02, F01P 7/16

(54) **KRAFTFAHRZEUG MIT EINEM KÜHLKREISLAUF UND VERFAHREN ZUM BETREIBEN EINES KÜHLKREISLAUFS EINES KRAFTFAHRZEUGES**

(30) Priorität: 24.10.2024 DE 102024210277
(71) Anmelder: Volkswagen Aktiengesellschaft, 38436 Wolfsburg (DE)
(72) Erfinder: Schnückel, Dr., Christian, 38110 Braunschweig (DE); Borchert, Christian, 38489 Rohrberg (DE)
(74) Vertreter: RGTH

(57) **Zusammenfassung**

Um ein Kraftfahrzeug mit einem Kühlkreislauf bereitzustellen, wobei eine Batterie mittels der Abwärme eines Antriebs des Kraftfahrzeuges geheizt werden kann, ohne dass ein Wärmeaustausch über einen Chiller des Kühlkreislaufs stattfindet, wird ein Kraftfahrzeug (100) mit einem Kühlkreislauf (10) umfassend mehrere Kühlstränge (11, 13, 15, 19, 33) vorgeschlagen, wobei in einem ersten Kühlstrang (11) eine Batterie (12) angeordnet ist, wobei in einem zweiten Kühlstrang (13) ein Chiller (14) angeordnet ist, und wobei in einem dritten Kühlstrang (15) ein Antrieb (16) und/oder Leistungskomponenten (17) angeordnet sind, wobei der Kühlkreislauf (10) ferner mindestens ein Stellmittel (22, 23) aufweist, wobei die mehreren Kühlstränge (11, 13, 15, 19, 33) durch Stellung des Stellmittels (22, 23) zur Umsetzung mehrerer Betriebsmodi des Kühlkreislaufs (10) verschaltet werden können, und wobei
- in einem ersten Betriebsmodus der erste Kühlstrang (11) und der zweite Kühlstrang (13) verschaltet sind, sodass die Batterie (12) und der Chiller (14) von einem Kühlmittel durchströmt werden, und wobei
- in einem zweiten Betriebsmodus der erste Kühlstrang (11) und der dritte Kühlstrang (15) verschaltet sind, sodass die Batterie (12) und der Antrieb (16) und/oder die Leistungskomponenten (17) von einem Kühlmittel durchströmt werden, und dass der zweite Kühlstrang (13) isoliert ist, sodass der Chiller (14) nicht von dem Kühlmittel durchströmt wird.

## Beschreibung

Die vorliegende Erfindung betrifft ein Kraftfahrzeug mit einem Kühlkreislauf umfassend mehrere Kühlstränge, wobei in einem ersten Kühlstrang eine Batterie angeordnet ist, wobei in einem zweiten Kühlstrang ein Chiller angeordnet ist, und wobei in einem dritten Kühlstrang ein Antrieb und/oder Leistungskomponenten angeordnet sind, wobei der Kühlkreislauf ferner mindestens ein Stellmittel aufweist, wobei die mehreren Kühlstränge durch Stellung des Stellmittels zur Umsetzung mehrerer Betriebsmodi des Kühlkreislaufs verschaltet werden können.

Ferner betrifft die vorliegende Erfindung ein Verfahren zum Betreiben eines Kühlkreislaufs eines Kraftfahrzeuges, wobei durch Stellung eines Stellmittels zur Umsetzung mehrerer Betriebsmodi Kühlstränge des Kühlkreislaufs verschaltet werden können.

In batterieelektrischen Fahrzeugen und/oder Hybridelektrokraftfahrzeugen sind Batterien, insbesondere Hochvoltbatterien, als Energiespeicher bekannt, welche einen kühlmitteldurchströmten Wärmetauscher umfassen. Für eine optimale Leistungsabgabe muss diese Batterie thermisch konditioniert werden. Das bedeutet, dass bei niedrigen Außentemperaturen die Batterien geheizt und bei hohen Außentemperaturen gekühlt werden müssen. Die Batterie stellt somit im Kühlkreislauf je nach thermischem Batteriezustand einmal eine Wärmesenke und ein anderes Mal eine Wärmequelle dar. Aus energetischer Sicht ist es sinnvoll, Verlustwärme, beispielsweise des Antriebs des Kraftfahrzeuges, zur Batterieheizung zu nutzen. Wenn die Batterie beheizt werden muss, ist es nachteilig, wenn gleichzeitig Kühlmittel über eine Wärmesenke, beispielsweise einen Chiller, des Kühlkreislaufs strömt. Der Chiller kann für eine thermische Kopplung des Kühlkreislaufs mit einem Kältekreislauf vorgesehen sein. Die kühlkreislaufseitige Durchströmung des Chillers kann daher zu einem unerwünschten Wärmeaustausch zwischen dem Kühlkreislauf und einem Kältekreislauf führen.

Aus der KR 10-2140658 B1 ist ein System zur Steuerung der Temperatur einer Batterie für ein Elektrofahrzeug bekannt, umfassend ein Vier-Wege-Ventil mit einer ersten und einer zweiten Zuflusseinheit und einer ersten und einer zweiten Abflusseinheit, wobei die erste Zuflusseinheit selektiv mit einer der ersten und der zweiten Abflusseinheit in Verbindung steht und die zweite Zuflusseinheit selektiv mit der anderen der ersten und der zweiten Abflusseinheit in Verbindung steht. Das System umfasst ferner einen ersten Strömungsweg, der ein durch eine erste Abflusseinheit geleitetes Kühlmittel einem Vorratstank zuführt, einen zweiten Strömungsweg, der das durch eine Batterie strömende Kühlmittel zur zweiten Zuflusseinheit zurückführt, einen dritten Strömungsweg, der das durch eine zweite Abflusseinheit abgeleitete Kühlmittel einem Kühler zuführt, einen vierten Strömungsweg, der ein Motormodul und eine Innenraumheizung mit dem durch den Kühler gekühlten Kühlmittel versorgt, und einen fünften Strömungsweg, der das durch das Motormodul und die Innenraumheizung strömende Kühlmittel zur ersten Zuflusseinheit zurückführt.

Die US 11,898,657 B2 offenbart ein Wärmemanagementsystem umfassend ein Ventil, einen Heizkörperkreislauf, der so konfiguriert ist, dass er mit dem Ventil verbunden werden kann, einen Leistungselektronikkreislauf, der so konfiguriert ist, dass er mit dem Ventil verbunden werden kann, einen Heizkreislauf, der so konfiguriert ist, dass er mit dem Ventil verbunden werden kann, und einen Batteriekreislauf, der so konfiguriert ist, dass er mit dem Ventil verbunden werden kann. Das Ventil ist so konfiguriert, dass es eine oder mehrere der Heizkörper-, Leistungselektronik-, Heizungs- und Batterieschleifen miteinander verbindet, und das Ventil ist so konfiguriert, dass es mindestens eine der Heizkörper-, Leistungselektronik-, Heizungs- und Batterieschleifen von allen verbleibenden Schleifen der Heizkörper-, Leistungselektronik-, Heizungs- und Batterieschleifen isoliert.

Die US 2024/0110630 A1 offenbart ein Mehr-Wege-Ventil für ein Elektrofahrzeug mit einem Gehäuse mit mindestens sechs Gehäuseöffnungen und einem Ventilkörper.

Der vorliegenden Erfindung liegt die Aufgabe zugrunde, ein Kraftfahrzeug mit einem Kühlkreislauf bereitzustellen, wobei eine Batterie mittels der Abwärme eines Antriebs des Kraftfahrzeuges geheizt werden kann, ohne dass ein Wärmeaustausch über einen Chiller des Kühlkreislaufs stattfindet.

Zur Lösung der der Erfindung zugrundeliegenden Aufgabe wird ein Kraftfahrzeug mit einem Kühlkreislauf umfassend mehrere Kühlstränge vorgeschlagen, wobei in einem ersten Kühlstrang eine Batterie angeordnet ist, wobei in einem zweiten Kühlstrang ein Chiller angeordnet ist, und wobei in einem dritten Kühlstrang ein Antrieb und/oder Leistungskomponenten angeordnet sind, wobei der Kühlkreislauf ferner mindestens ein Stellmittel aufweist, wobei die mehreren Kühlstränge durch Stellung des Stellmittels zur Umsetzung mehrerer Betriebsmodi des Kühlkreislaufs derart verschaltet werden können, dass
- in einem ersten Betriebsmodus der erste Kühlstrang und der zweite Kühlstrang verschaltet sind, sodass die Batterie und der Chiller von einem Kühlmittel durchströmt werden, und dass
- in einem zweiten Betriebsmodus der erste Kühlstrang und der dritte Kühlstrang verschaltet sind, sodass die Batterie und der Antrieb und/oder die Leistungskomponenten von einem Kühlmittel durchströmt werden, und dass zweite Kühlstrang isoliert ist, sodass der Chiller nicht von dem Kühlmittel durchströmt wird.

Das Kraftfahrzeug ist bevorzugt ein batterieelektrisches Fahrzeug oder ein Hybridelektrokraftfahrzeug. Bei der Batterie des Kraftfahrzeuges handelt es sich bevorzugt um eine Antriebsbatterie zur Bereitstellung der für den, insbesondere elektrischen, Antrieb benötigten Energie.

Soweit im Rahmen der Erfindung die Batterie, der Antrieb, die Leistungskomponenten oder weitere Komponenten von einem Kühlmittel durchströmt werden, so bedeutet dies, dass die entsprechenden Komponenten geeignete Wärmeübertrager oder Wärmetauscher zum Übertragen von Wärme von der Komponente auf das Kühlmittel und umgekehrt aufweisen. Derartige Wärmeübertrager oder Wärmetauscher sind dem Fachmann bekannt.

Der Chiller dient bevorzugt der thermischen Kopplung des Kühlkreislaufs mit einem Kältekreislauf des Kraftfahrzeuges.

Durch Stellung des Stellmittels können somit die Kühlstränge, insbesondere Teilmengen der Kühlstränge, zu Teil-Kühlkreisläufen miteinander verschaltet werden. Die Kühlstränge sind über Verbindungen fluidisch miteinander verbunden, wobei an zentraler Stelle des Kühlkreislaufs das mindestens eine Stellmittel vorgesehen ist. Dabei ist bevorzugt jeder der Kühlstränge mit einem Eingang oder Ausgang des mindestens einen Stellmittels fluidisch verbunden. Durch Stellung des Stellmittels werden die Eingänge und/oder Ausgänge wahlweise geöffnet und geschlossen, sodass die mit dem mindestens einen Stellmittel verbundenen Kühlstränge fluidisch verbunden und getrennt werden können.

Erfindungsgemäß ist vorgesehen, dass in einem ersten Betriebsmodus der erste Kühlstrang und der zweite Kühlstrang verschaltet sind, sodass die Batterie und der Chiller von einem Kühlmittel durchströmt werden. Somit kann die Batterie durch das vom Chiller gekühlte Kühlmittel gekühlt werden. Dabei bilden bevorzugt der erste Kühlstrang und der zweite Kühlstrang einen fluidisch isolierten Teil-Kühlkreislauf aus, das heißt, dass dem Teil-Kühlkreislauf aus dem erstem Kühlstrang und dem zweitem Kühlstrang kein Kühlmittel von weiteren Kühlsträngen zugeführt wird.

Ferner ist erfindungsgemäß vorgesehen, dass in einem zweiten Betriebsmodus der erste Kühlstrang und der dritte Kühlstrang verschaltet sind, sodass die Batterie und der Antrieb und/oder die Leistungskomponenten von einem Kühlmittel durchströmt werden und dass der zweite Kühlstrang isoliert ist, sodass der Chiller nicht von dem Kühlmittel durchströmt wird.

Der zweite Kühlstrang umfassend den Chiller ist somit bevorzugt fluidisch zumindest von dem ersten Kühlstrang und dem dritten Kühlstrang isoliert.

Bevorzugt ist daher das mindestens eine Stellmittel derart geschaltet, dass ein Ausgang oder Eingang des Stellmittels, welcher die Verbindung zu dem zweiten Kühlstrang mit dem Chiller herstellt, geschlossen ist. Hierdurch wird ein Durchströmen des Chillers von dem Kühlmittel verhindert.

In dem zweiten Betriebsmodus wird somit das Kühlmittel durch die Batterie im ersten Kühlstrang und den Antrieb und/oder die Leistungskomponenten im dritten Kühlstrang geleitet. Das Kühlmittel kann daher Abwärme von dem Antrieb und/oder den Leistungskomponenten aufnehmen, und diese Abwärme kann zum Heizen der Batterie genutzt werden. Wesentlich an dem zweiten Betriebsmodus ist dabei, dass der Chiller nicht von dem Kühlmittel durchströmt wird. Der Chiller stellt daher im Kühlkreislauf im zweiten Betriebsmodus keine unerwünschte Wärmesenke dar.

Bevorzugt kann vorgesehen sein, dass in einem vierten Kühlstrang eine Wärmesenke, insbesondere ein Wärmetauscher, weiter insbesondere ein Niedertemperatur-Wärmetauscher, angeordnet ist.

Der Niedertemperatur-Wärmetauscher dient üblicherweise dem Wärmeaustausch mit der Außenumgebung des Kraftfahrzeuges.

Dabei kann bevorzugt vorgesehen sein, dass in dem ersten Betriebsmodus zusätzlich der dritte Kühlstrang und der vierte Kühlstrang verschaltet sind, sodass der Antrieb und/oder die Leistungskomponenten und die Wärmesenke von einem Kühlmittel durchströmt werden.

Somit können im ersten Betriebsmodus die Batterie über den Chiller und gleichzeitig der Antrieb und/oder die Leistungskomponenten über die Wärmesenke gekühlt werden.

Mit weiterem Vorteil kann vorgesehen sein, dass in dem ersten Kühlstrang und/oder in dem zweiten Kühlstrang und/oder in einem fünften Kühlstrang eine Wärmequelle, insbesondere ein Hochvoltheizer, angeordnet ist.

Die Wärmequelle, insbesondere der Hochvoltheizer, kann insbesondere dann zur Heizung der Batterie und/oder des Chillers genutzt werden, wenn der Antrieb und/oder die Leistungskomponenten keine ausreichende Abwärme zur Verfügung stellen. Die Wärmequelle kann dafür verwendet werden, den Chiller zu heizen und Wärme von dem Kühlkreislauf auf einen mit dem Chiller thermisch gekoppelten Kältekreislauf zu übertragen.

Bevorzugt ist in einem dritten Betriebsmodus vorgesehen, dass
- der erste Kühlstrang und der zweite Kühlstrang verschaltet sind, dass die Batterie und der Chiller und die Wärmequelle von einem Kühlmittel durchströmt werden.

Dies ist insbesondere dann vorteilhaft, wenn die Wärmequelle in dem ersten Kühlstrang und/oder dem zweiten Kühlstrang angeordnet ist. Alternativ oder zusätzlich kann in dem dritten Betriebsmodus auch vorgesehen sein, dass
- der erste Kühlstrang und der zweite Kühlstrang und der fünfte Kühlstrang verschaltet sind, sodass die Batterie und der Chiller und die Wärmequelle von einem Kühlmittel durchströmt werden.

Dies ist insbesondere dann vorteilhaft, wenn die Wärmequelle, insbesondere der Hochvoltheizer, in einem fünften Kühlstrang angeordnet ist.

Im dritten Betriebsmodus können die Batterie und/oder der Chiller über die Wärmequelle geheizt werden.

Ebenso wie im ersten Betriebsmodus können auch im dritten Betriebsmodus der dritte Kühlstrang und der vierte Kühlstrang verschaltet sein, sodass der Antrieb und/oder die Leistungskomponenten und die Wärmesenke von einem Kühlmittel durchströmt werden.

Entsprechend kann in dem dritten Betriebsmodus vorgesehen sein, dass
- der dritte Kühlstrang und der vierte Kühlstrang verschaltet sind, sodass der Antrieb und/oder die Leistungskomponenten und die Wärmesenke von einem Kühlmittel durchströmt werden.

In diesem Fall kann der dritte Betriebsmodus hinsichtlich der Stellung des mindestens einen Stellmittels dem ersten Betriebsmodus entsprechen, wobei jedoch im ersten Betriebsmodus die Batterie gekühlt wird und im dritten Betriebsmodus die Batterie und/oder der Chiller von der Wärmequelle geheizt werden.

Ferner kann vorgesehen sein, dass in einem vierten Betriebsmodus
- der erste Kühlstrang und der vierte Kühlstrang verschaltet sind, sodass die Batterie und die Wärmesenke von einem Kühlmittel durchströmt werden.

Die Wärmesenke ist bevorzugt ein Niedertemperatur-Wärmetauscher. Dies bedeutet insbesondere, dass die Batterie des Kraftfahrzeuges durch Wärmeaustausch mit der Außenumgebung des Kraftfahrzeuges über die Wärmesenke, insbesondere den Niedertemperatur-Wärmetauscher, gekühlt werden kann.

Im vierten Betriebsmodus kann zudem vorgesehen sein, dass auch der dritte Kühlstrang von einem Kühlmittel durchströmt wird, sodass neben der Batterie auch der Antrieb und/oder die Leistungskomponenten über die Wärmesenke gekühlt werden können.

Ferner bevorzugt sind in einem fünften Betriebsmodus
- der zweite Kühlstrang und der dritte Kühlstrang verschaltet, sodass der Chiller und der Antrieb und/oder die Leistungskomponenten von einem Kühlmittel durchströmt werden.

Im fünften Betriebsmodus können somit der Antrieb und/oder die Leistungskomponenten über den Chiller gekühlt werden. Wenn der Kühlkreis über den Chiller mit einem Kältekreis gekoppelt ist, so kann im fünften Betriebsmodus Abwärme des Antriebs und/oder der Leistungskomponenten auf den Kältekreis übertragen werden, sodass der Kältekreis als Wärmepumpe betrieben werden kann.

Im fünften Betriebsmodus kann zusätzlich vorgesehen sein, dass der zweite, dritte und vierte Kühlstrang miteinander verschaltet sind, sodass der Chiller und der Antrieb und/oder die Leistungskomponenten und die Wärmesenke, insbesondere der Niedertemperaturwärmetauscher, von dem Kühlmittel durchströmt werden.

Im fünften Betriebsmodus kann ferner vorgesehen sein, dass der erste Kühlstrang von den weiteren Kühlsträngen fluidisch isoliert ist, sodass die Batterie, weder gekühlt noch beheizt wird. Ebenso kann im fünften Betriebsmodus vorgesehen sein, dass, wenn eine Wärmequelle in einem fünften Kühlstrang angeordnet ist, der erste Kühlstrang und der fünfte Kühlstrang verschaltet sind, sodass die Batterie geheizt werden kann. Insbesondere stellen in diesem Fall der zweite Kühlstrang und der dritte Kühlstrang, gegebenenfalls zusätzlich der vierte Kühlstrang, einen ersten Teil-Kühlkreislauf dar, welcher fluidisch und thermisch von einem aus dem ersten Kühlstrang und dem fünften Kühlstrang gebildeten zweiten Teil-Kühlkreislauf getrennt ist.

Bevorzugt umfasst das mindestens eine Stellmittel mindestens ein Vier-Wege-Ventil.

Dabei ist insbesondere bevorzugt vorgesehen, dass das mindestens eine Vier-Wege-Ventil mindestens vier, bevorzugt mindestens fünf, weiter bevorzugt mindestens sechs, insbesondere bevorzugt mindestens sieben, Schaltmöglichkeiten, d.h. Konfigurationen zur schaltbaren Verbindungen der vier Ein- und Ausgänge, umfasst.

Weiter bevorzugt umfasst das mindestens eine Stellmittel zwei Vier-Wege-Ventile. Die zwei Vier-Wege-Ventile sind dabei an zentraler Stelle im Kühlkreislauf angeordnet, und insbesondere ist ein Ausgang eines ersten Vier-Wege-Ventils mit einem Eingang eines zweiten Vier-Wege-Ventils verbunden.

Durch entsprechende Stellung der beiden Vier-Wege-Ventile können die vorstehend erläuterten Betriebsmodi geschaltet werden.

Mit weiterem Vorteil kann vorgesehen sein, dass das mindestens eine Stellmittel ein Fünf-Wege-Ventil enthält. Bevorzugt ist dabei vorgesehen, dass das mindestens eine Fünf-Wege-Ventil mindestens sechs, bevorzugt mindestens sieben, insbesondere bevorzugt mindestens acht, Schaltmöglichkeiten aufweist.

Mit noch weiterem Vorteil kann vorgesehen sein, dass das mindestens eine Stellmittel ein Sechs-Wege-Ventil enthält. Dabei ist ferner bevorzugt vorgesehen, dass das Sechs-Wege-Ventil mindestens sieben, weiter bevorzugt mindestens acht, insbesondere bevorzugt mindestens neun, Schaltmöglichkeiten aufweist.

Eine weitere Lösung der der Erfindung zugrundeliegenden Aufgabe besteht in einem Verfahren zum Betreiben eines Kühlkreislaufs eines vorbeschriebenen Kraftfahrzeuges, wobei die Kühlstränge durch Stellung des Stellmittels zur Umsetzung mehrerer Betriebsmodi des Kühlkreislaufs verschaltet werden können, wobei vorgesehen ist, dass in einem ersten Betriebsmodus der erste Kühlstrang und der zweite Kühlstrang verschaltet sind und von einem Kühlmittel durchströmt werden, und dass in einem zweiten Betriebsmodus der erste und der dritte Kühlstrang verschaltet sind und von einem Kühlmittel durchströmt werden und der zweite Kühlstrang nicht von dem Kühlmittel durchströmt wird.

Sämtliche hinsichtlich des vorstehend beschriebenen Kraftfahrzeuges erläuterten Ausgestaltungen, Funktionen und Merkmale können in entsprechend analoger Weise auch auf das Verfahren übertragen werden.

Die Erfindung wird nachstehend näher anhand der beigefügten Figuren erläutert. Es zeigen:
- Fig. 1: ein Kraftfahrzeug mit einem Kühlkreislauf umfassend zwei Vier-Wege-Ventile,
- Fig. 2a)-2g): Schaltmöglichkeiten der Vier-Wege-Ventile,
- Fig. 3: ein Kraftfahrzeug mit einem Kühlkreislauf umfassend ein Fünf-Wege-Ventil,
- Fig. 4a)-4h): Schaltmöglichkeiten des Fünf-Wege-Ventils,
- Fig. 5: ein Kraftfahrzeug mit einem Kühlkreislauf umfassend ein Sechs-Wege-Ventil, und
- Fig. 6a)-6i): Schaltmöglichkeiten des Sechs-Wege-Ventils.

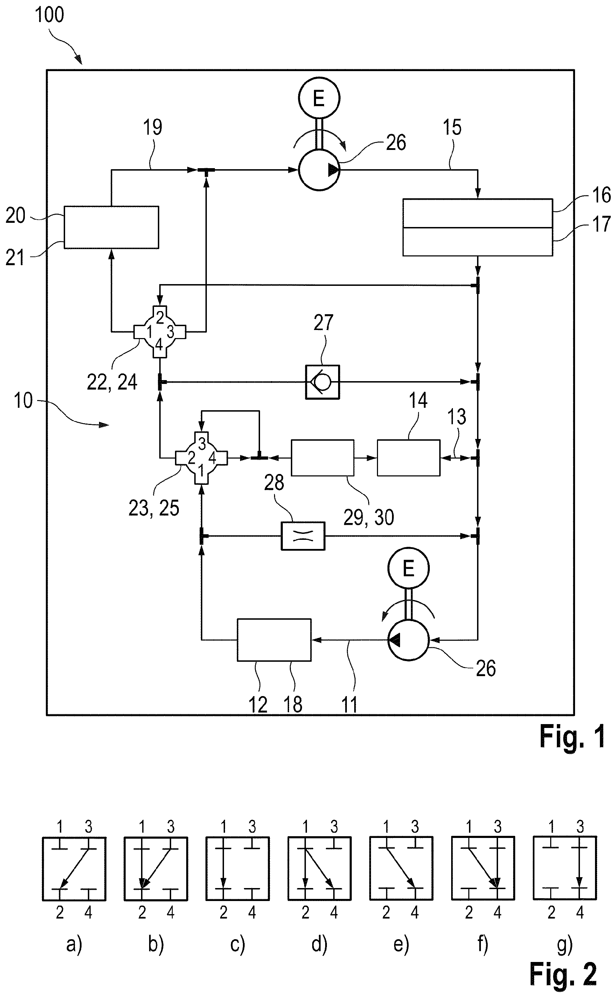

Fig. 1 zeigt schematisch ein Kraftfahrzeug 100 mit einem Kühlkreislauf 10. Der Kühlkreislauf 10 umfasst einen ersten Kühlstrang 11, in dem eine Batterie 12 angeordnet ist, einen zweiten Kühlstrang 13, in dem ein Chiller 14 angeordnet ist, und einen dritten Kühlstrang 15, in dem ein Antrieb 16 des Kraftfahrzeuges 100 und Leistungskomponenten 17 angeordnet sind. Die Batterie 12 ist als Antriebsbatterie 18 ausgebildet und stellt die für den Antrieb 16 benötigte Energie zur Verfügung. Der Chiller 14 dient zur thermischen Kopplung an einen nicht näher dargestellten Kältekreislauf des Kraftfahrzeuges 100.

Der Kühlkreislauf 10 weist ferner einen vierten Kühlstrang 19 auf, in dem eine Wärmesenke 20, insbesondere ein Niedertemperatur-Wärmetauscher 21, angeordnet ist. Ferner umfasst der Kühlkreislauf 10 an zentraler Stelle zwei Stellmittel 22, 23, welche als Vier-Wege-Ventile 24, 25 ausgebildet sind. Jedes der Stellmittel 22, 23 weist vier Ein- beziehungsweise Ausgänge auf, welche in der Zeichnung für jedes Ventil mit den Ziffern 1, 2, 3 und 4 durchnummeriert sind. Der Kühlkreislauf 10 umfasst ferner Pumpen 26, Rückschlagventile 27 und Drosselventile 28.

In den Fig. 2 a) bis g) sind die Schaltmöglichkeiten der Vier-Wege-Ventile 24, 25 dargestellt. Wie in Fig. 1 sind die Ein- beziehungsweise Ausgänge der Vier-Wege-Ventile mit 1, 2, 3 und 4 durchnummeriert.

Die Kühlstränge 11, 13, 15, 19 können durch Stellung der Stellmittel 22, 23, d.h. des ersten Vier-Wege-Ventils 24 und des zweiten Vier-Wege-Ventils 25, zur Umsetzung mehrerer Betriebsmodi des Kühlkreislaufs 10 verschaltet werden.

In einem ersten Betriebsmodus wird das erste Vier-Wege-Ventil 24 in der Schaltstellung nach Fig. 2a) geschaltet, in welcher die Ein- und Ausgänge 2 und 3 verbunden sind, und das zweite Vier-Wege-Ventil 25 wird in der Schaltstellung nach Fig. 2e) geschaltet, in der die Ein- und Ausgänge 1 und 4 miteinander verbunden sind. Durch das zweite Vier-Wege-Ventil 25 werden somit der erste Kühlstrang 11 und der zweite Kühlstrang 13 verschaltet, sodass die Batterie 12 und der Chiller 14 von dem Kühlmittel durchströmt werden. Entsprechend kann die Batterie 13 über den Chiller 14 gekühlt werden. Durch die Schaltung des ersten Vier-Wege-Ventils 24 nach Schaltmöglichkeit gemäß Fig. 2a) wird der dritte Kühlstrang 15 fluidisch und thermisch isoliert, sodass der Antrieb 16 und die Leistungskomponenten 17 auf einem eigenen Temperaturniveau vom Kühlmittel durchströmt werden. In dem ersten Betriebsmodus kann alternativ das erste Vierwege-Ventil 24 auch nach Schaltmöglichkeit gemäß Fig. 2c) geschaltet werden. In diesem Fall werden der dritte Kühlstrang 15 und der vierte Kühlstrang 19 verschaltet, sodass der Antrieb 16 und die Leistungskomponenten 17 über den Niedertemperatur-Wärmetauscher 21 im vierten Kühlstrang 19 gekühlt werden.

In einem zweiten Betriebsmodus werden der erste Kühlstrang 11 und der dritte Kühlstrang 15 durch Stellung des ersten Vier-Wege-Ventils 24 nach Schaltmöglichkeit gemäß Fig. 2 g) und des zweiten Vier-Wege-Ventils 25 nach Schaltmöglichkeit gemäß Fig. 2 c) verschaltet. Im zweiten Betriebsmodus wird die Batterie 12 mittels der Abwärme des Antriebs 16 und der Leistungskomponenten 17 geheizt. Wesentlich ist dabei, dass im zweiten Betriebsmodus die Eingänge 4 und 3 des zweiten Vier-Wege-Ventils 25 geschlossen sind, sodass der Chiller 14 nicht von dem Kühlmittel durchströmt wird. Dies ist energetisch vorteilhaft, da keine Wärme über den Chiller 14, welcher mit einem Kältekreislauf thermisch gekoppelt ist, dem Kühlkreislauf 10 entzogen wird.

Im zweiten Kühlstrang 13 ist neben dem Chiller 14 auch eine als Hochvoltheizer 29 ausgebildete Wärmequelle 30 angeordnet. Mittels des Hochvoltheizers 29 können in einem dritten Betriebsmodus die Batterie 12 und/oder der Chiller 14 geheizt werden. Hierfür werden im dritten Betriebsmodus der erste Kühlstrang 11 und der zweite Kühlstrang 13 durch Stellung des ersten Vier-Wege-Ventils 24 nach Schaltmöglichkeit gemäß Fig. 2 a) oder Fig. 2c) und des zweiten Vier-Wege-Ventils 25 nach Schaltmöglichkeit gemäß Fig. 2e) verschaltet. Die Schaltkonfiguration entspricht dabei der Schaltkonfiguration des ersten Betriebsmodus, jedoch wird im dritten Betriebsmodus der Hochvoltheizer 29 zum Heizen der Batterie 14 und/oder des Chillers 14 betrieben.

In einem vierten Betriebsmodus werden der erste Kühlstrang 11 und der vierte Kühlstrang 19 durch Stellung des ersten Vier-Wege-Ventils 24 nach Schaltmöglichkeit gemäß Fig. 2e) und des zweiten Vier-Wege-Ventils 25 nach Schaltmöglichkeit gemäß Fig. 2c) verschaltet. Im vierten Betriebsmodus werden die Batterie 12 und der Niedertemperatur-Wärmetauscher 21 von dem Kühlmittel durchströmt, sodass die Batterie 12 über den Niedertemperatur-Wärmetauscher 21 gekühlt werden kann.

In einem fünften Betriebsmodus sind der zweite Kühlstrang 13 und der dritte Kühlstrang 15 durch Stellung des ersten Vier-Wege-Ventils 24 nach Schaltmöglichkeit gemäß Fig. 2e) oder Fig. 2g) und des zweiten Vier-Wege-Ventils 25 nach Schaltmöglichkeit gemäß Fig. 2 a) verschaltet, sodass der Chiller 14 und der Antrieb 16 und/oder die Leistungskomponenten 17 und/oder die Wärmesenke 20, insbesondere der Niedertemperatur-Wärmetauscher 21, von dem Kühlmittel durchströmt werden. Dabei wird die Batterie 12 im ersten Kühlstrang 11 auf dem eigenen Temperaturniveau durchströmt, ohne geheizt oder gekühlt zu werden.

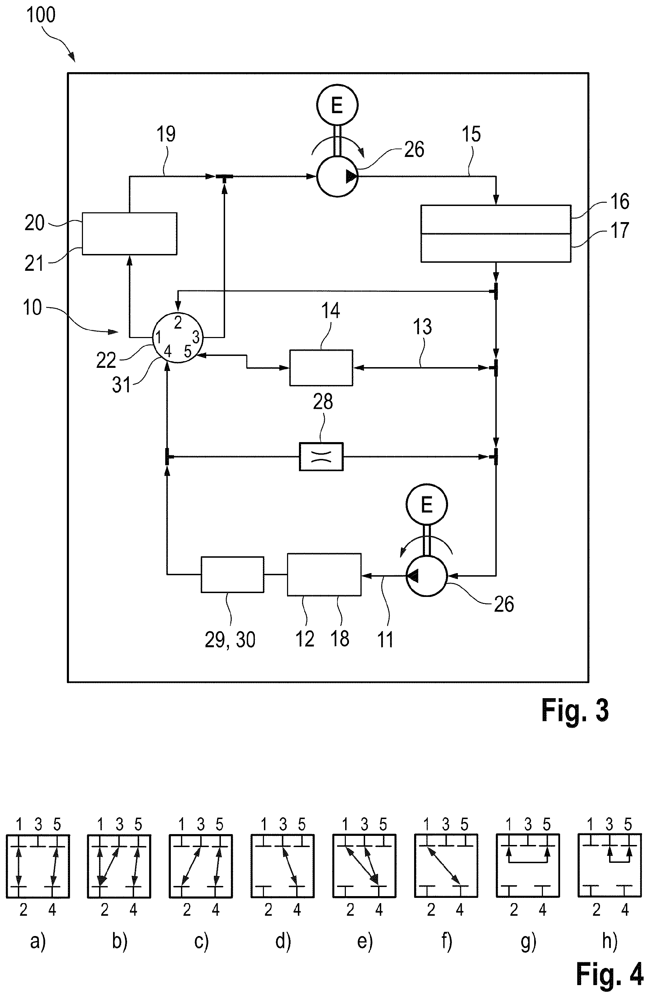

Fig. 3 zeigt einen weiteren Kühlkreislauf 10. Anstelle der zwei Vier-Wege-Ventile 24, 25 nach Fig. 1 ist ein zentrales Fünf-Wege-Ventil 31 in dem Kühlkreislauf 10 vorgesehen.

In den Fig. 4a) bis 4g) sind die Schaltstellungen des Fünf-Wege-Ventils 31 dargestellt. Wie in Fig. 3 sind die Ein- beziehungsweise Ausgänge des Fünf-Wege-Ventils 31 mit den Ziffern 1, 2, 3, 4 und 5 durchnummeriert.

Die Betriebsmodi des Kühlkreislaufs 10 können wie folgt realisiert werden.

In dem ersten Betriebsmodus wird das Fünf-Wege-Ventil 31 in der Schaltstellung nach Fig. 4c) geschaltet, in welcher die Ein- und Ausgänge 2 und 3 untereinander sowie die Ein- und Ausgänge 4 und 5 untereinander verbunden sind. Es werden somit der erste Kühlstrang 11 und der zweite Kühlstrang 13 verschaltet, sodass die Batterie 12 und der Chiller 14 von dem Kühlmittel durchströmt werden. Entsprechend kann die Batterie 13 über den Chiller 14 gekühlt werden. Der dritte Kühlstrang 15 ist fluidisch und thermisch isoliert, sodass der Antrieb 16 und die Leistungskomponenten 17 auf einem eigenen Temperaturniveau durchströmt werden. In dem ersten Betriebsmodus kann alternativ das Fünf-Wege-Ventil 31 auch nach Schaltmöglichkeit gemäß Fig. 4a) geschaltet werden. In diesem Fall werden der dritte Kühlstrang 15 und der vierte Kühlstrang 19 verschaltet, sodass der Antrieb 16 und die Leistungskomponenten 17 über den Niedertemperatur-Wärmetauscher 21 im vierten Kühlstrang 19 gekühlt werden.

Im zweiten Betriebsmodus werden der erste Kühlstrang 11 und der dritte Kühlstrang 15 durch Stellung des Fünf-Wege-Ventils 31 nach Schaltmöglichkeit gemäß Fig. 4d) verschaltet. Im zweiten Betriebsmodus wird die Batterie 12 mittels der Abwärme des Antriebs 16 und der Leistungskomponenten 17 geheizt. Wesentlich ist dabei, dass im zweiten Betriebsmodus Eingang 5 des Fünf-Wege-Ventils 31 geschlossen ist, sodass der Chiller 14 nicht von dem Kühlmittel durchströmt wird.

Im ersten Kühlstrang 11 ist neben der Batterie 12 auch die als Hochvoltheizer 29 ausgebildete Wärmequelle 30 angeordnet. Mittels des Hochvoltheizers 29 können in einem dritten Betriebsmodus die Batterie 12 und/oder der Chiller 14 geheizt werden. Hierfür werden im dritten Betriebsmodus der erste Kühlstrang 11 und der zweite Kühlstrang 13 durch Stellung des Fünf-Wege-Ventils 31 nach Schaltmöglichkeit gemäß Fig. 4a) oder Fig. 4c) verschaltet. Die Schaltkonfiguration entspricht dabei der Schaltkonfiguration des ersten Betriebsmodus, jedoch wird im dritten Betriebsmodus der Hochvoltheizer 29 zum Heizen der Batterie 12 und/oder des Chillers 14 betrieben.

In dem vierten Betriebsmodus werden der erste Kühlstrang 11 und der vierte Kühlstrang 19 durch Stellung des Fünf-Wege-Ventils 31 nach Schaltmöglichkeit gemäß Fig. 4f) verschaltet. Im vierten Betriebsmodus werden die Batterie 12 und der Niedertemperatur-Wärmetauscher 21 von dem Kühlmittel durchströmt, sodass die Batterie 12 über den Niedertemperatur-Wärmetauscher 21 gekühlt werden kann.

In dem fünften Betriebsmodus sind der zweite Kühlstrang 13 und der dritte Kühlstrang 15 durch Stellung des Fünf-Wege-Ventils 31 nach Schaltmöglichkeit gemäß Fig. 4g) oder Fig. 4h) verschaltet, sodass der Chiller 14 und der Antrieb 16 und/oder die Leistungskomponenten 17 und/oder die Wärmesenke 20, insbesondere der Niedertemperatur-Wärmetauscher 21, von dem Kühlmittel durchströmt werden. Dabei wird die Batterie 12 im ersten Kühlstrang 11 auf dem eigenen Temperaturniveau durchströmt, ohne geheizt oder gekühlt zu werden.

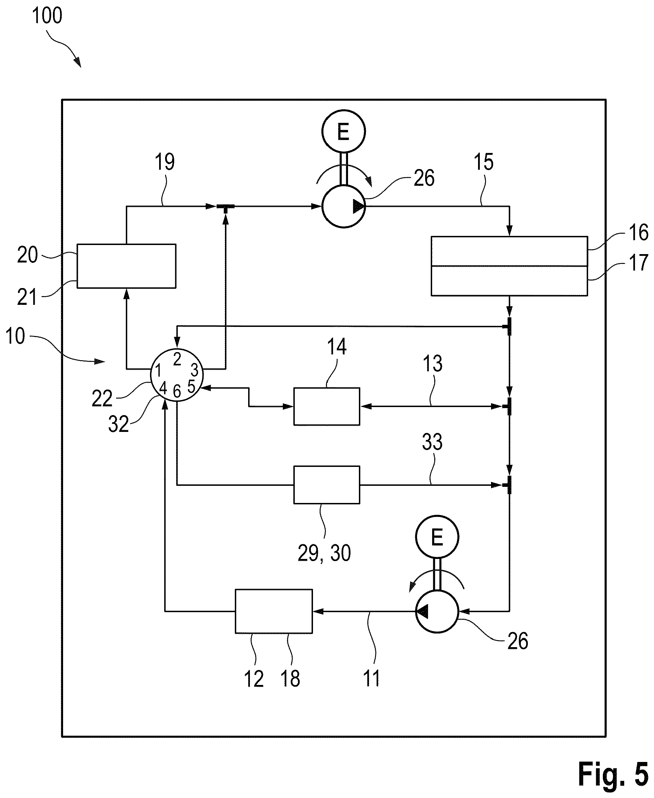

Fig. 5 zeigt noch einen weiteren Kühlkreislauf 10. Anstelle der zwei Vier-Wege-Ventile 24, 25 nach Fig. 1 ist ein zentrales Sechs-Wege-Ventil 32 in dem Kühlkreislauf 10 vorgesehen. Zudem ist ein fünfter Kühlstrang 33 vorgesehen, in dem die als Hochvoltheizer 29 ausgebildete Wärmequelle 30 angeordnet ist.

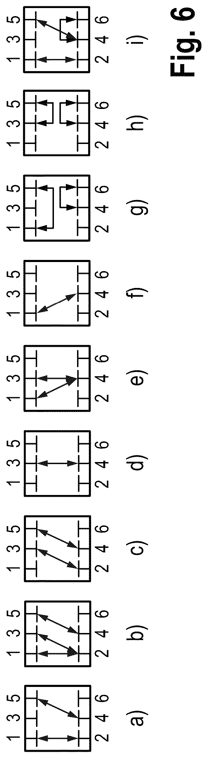

In den Fig. 6a) bis 6ig) sind die Schaltstellungen des Sechs-Wege-Ventils 32 dargestellt. Wie in Fig. 5 sind die Ein- beziehungsweise Ausgänge des Sechs-Wege-Ventils 32 mit 1 bis 6 durchnummeriert.

Die Betriebsmodi des Kühlkreislaufs 10 können wie folgt realisiert werden.

In dem ersten Betriebsmodus wird das Sechs-Wege-Ventil 32 in der Schaltstellung nach Fig. 6c) geschaltet. Es werden somit der erste Kühlstrang 11 und der zweite Kühlstrang 13 verschaltet, sodass die Batterie 12 und der Chiller 14 von dem Kühlmittel durchströmt werden. Entsprechend kann die Batterie 13 über den Chiller 14 gekühlt werden. Der dritte Kühlstrang 15 ist fluidisch und thermisch isoliert, sodass der Antrieb 16 und die Leistungskomponenten 17 auf einem eigenen Temperaturniveau durchströmt werden. In dem ersten Betriebsmodus kann alternativ das Sechs-Wege-Ventil 32 auch nach Schaltmöglichkeit gemäß Fig. 6a) geschaltet werden. In diesem Fall werden der dritte Kühlstrang 15 und der vierte Kühlstrang 19 verschaltet, sodass der Antrieb 16 und die Leistungskomponenten 17 über den Niedertemperatur-Wärmetauscher 21 im vierten Kühlstrang 19 gekühlt werden.

Im zweiten Betriebsmodus werden der erste Kühlstrang 11 und der dritte Kühlstrang 15 durch Stellung des Sechs-Wege-Ventils 32 nach Schaltmöglichkeit gemäß Fig. 6d) verschaltet. Im zweiten Betriebsmodus wird die Batterie 12 mittels der Abwärme des Antriebs 16 und der Leistungskomponenten 17 geheizt. Wesentlich ist dabei, dass im zweiten Betriebsmodus Eingang 5 des Sechs-Wege-Ventils 31 geschlossen ist, sodass der Chiller 14 nicht von dem Kühlmittel durchströmt wird.

Anders als in den Kühlkreisläufen der Fig. 1 und 3 ist der Hochvoltheizer 29 in einem eigenen fünften Kühlstrang 33 angeordnet. Mittels des Hochvoltheizers 29 können in dem dritten Betriebsmodus die Batterie 12 und/oder der Chiller 14 geheizt werden. Hierfür werden im dritten Betriebsmodus der erste Kühlstrang 11, der zweite Kühlstrang 13 sowie der fünfte Kühlstrang 33 durch Stellung des Sechs-Wege-Ventils 32 nach Schaltmöglichkeit gemäß Fig. 6i) verschaltet.

Im vierten Betriebsmodus werden der erste Kühlstrang 11 und der vierte Kühlstrang 19 durch Stellung des Sechs-Wege-Ventils 32 nach Schaltmöglichkeit gemäß Fig. 6f) verschaltet. Im vierten Betriebsmodus werden die Batterie 12 und der Niedertemperatur-Wärmetauscher 21 von dem Kühlmittel durchströmt, sodass die Batterie 12 über den Niedertemperatur-Wärmetauscher 21 gekühlt werden kann.

In dem fünften Betriebsmodus sind der zweite Kühlstrang 13 und der dritte Kühlstrang 15 durch Stellung des Sechs-Wege-Ventils 32 nach Schaltmöglichkeit gemäß Fig. 6g) oder Fig. 6h) verschaltet, sodass der Chiller 14 und der Antrieb 16 und/oder die Leistungskomponenten 17 und/oder die Wärmesenke 20, insbesondere der Niedertemperatur-Wärmetauscher 21, von dem Kühlmittel durchströmt werden. Dabei wird die Batterie 12 im ersten Kühlstrang 11 auf dem eigenen Temperaturniveau durchströmt, bzw. kann mittels des Hochvoltheizers 29 geheizt werden.

### Bezugszeichenliste

- 100: Kraftfahrzeug

- 10: Kühlkreislauf
- 11: Erster Kühlstrang
- 12: Batterie
- 13: Zweiter Kühlstrang
- 14: Chiller
- 15: Dritter Kühlstrang
- 16: Antrieb
- 17: Leistungskomponente
- 18: Antriebsbatterie
- 19: Vierter Kühlstrang
- 20: Wärmesenke
- 21: Niedertemperatur-Wärmetauscher
- 22: Stellmittel
- 23: Stellmittel
- 24: Erstes Vier-Wege-Ventil
- 25: Zweites Vier-Wege-Ventil
- 26: Pumpe
- 27: Rückschlagventil
- 28: Drosselventil
- 29: Hochvoltheizer
- 30: Wärmequelle
- 31: Fünf-Wege-Ventil
- 32: Sechs-Wege-Ventil
- 33: Fünfter Kühlstrang

## Patentansprüche

1. Kraftfahrzeug (100) mit einem Kühlkreislauf (10) umfassend mehrere Kühlstränge (11, 13, 15, 19, 33), wobei in einem ersten Kühlstrang (11) eine Batterie (12) angeordnet ist, wobei in einem zweiten Kühlstrang (13) ein Chiller (14) angeordnet ist, und wobei in einem dritten Kühlstrang (15) ein Antrieb (16) und/oder Leistungskomponenten (17) angeordnet sind, wobei der Kühlkreislauf (10) ferner mindestens ein Stellmittel (22, 23) aufweist, wobei die mehreren Kühlstränge (11, 13, 15, 19, 33) durch Stellung des Stellmittels (22, 23) zur Umsetzung mehrerer Betriebsmodi des Kühlkreislaufs (10) verschaltet werden können, **dadurch gekennzeichnet, dass**
- in einem ersten Betriebsmodus der erste Kühlstrang (11) und der zweite Kühlstrang (13) verschaltet sind, sodass die Batterie (12) und der Chiller (14) von einem Kühlmittel durchströmt werden, und dass
- in einem zweiten Betriebsmodus der erste Kühlstrang (11) und der dritte Kühlstrang (15) verschaltet sind, sodass die Batterie (12) und der Antrieb (16) und/oder die Leistungskomponenten (17) von einem Kühlmittel durchströmt werden, und dass der zweite Kühlstrang (13) isoliert ist, sodass der Chiller (14) nicht von dem Kühlmittel durchströmt wird.

2. Kraftfahrzeug (100) mit einem Kühlkreislauf (10) nach Anspruch 1, wobei in einem vierten Kühlstrang (19) eine Wärmesenke (20), insbesondere ein Wärmetauscher, weiter insbesondere ein Niedertemperatur-Wärmetauscher (21), angeordnet ist.

3. Kraftfahrzeug (100) mit einem Kühlkreislauf (10) nach Anspruch 2, wobei in dem ersten Betriebsmodus
- der dritte Kühlstrang (15) und der vierte Kühlstrang (19) verschaltet sind, sodass der Antrieb (16) und/oder die Leistungskomponenten (17) und die Wärmesenke (20) von einem Kühlmittel durchströmt werden.

4. Kraftfahrzeug (100) mit einem Kühlkreislauf (10) nach einem der vorgenannten Ansprüche, wobei in dem ersten Kühlstrang (11) und/oder in dem zweiten Kühlstrang (13) und/oder in einem fünften Kühlstrang (33) eine Wärmequelle (30), insbesondere ein Hochvolt-Heizer (29), angeordnet ist.

5. Kraftfahrzeug (100) mit einem Kühlkreislauf (10) nach Anspruch 4, wobei in einem dritten Betriebsmodus
- der erste Kühlstrang (11) und der zweite Kühlstrang (13) verschaltet sind, sodass die Batterie (12) und der Chiller (14) und die Wärmequelle (30) von einem Kühlmittel durchströmt werden, oder dass
- der erste Kühlstrang (11) und der zweite Kühlstrang (13) und der fünfte Kühlstrang (33) verschaltet sind, sodass die Batterie (12) und der Chiller (14) und die Wärmequelle (30) von einem Kühlmittel durchströmt werden.

6. Kraftfahrzeug (100) mit einem Kühlkreislauf (10) nach Anspruch 5, wobei in dem dritten Betriebsmodus
- der dritte Kühlstrang (15) und der vierte Kühlstrang (19) verschaltet sind, sodass der Antrieb (16) und/oder die Leistungskomponenten (17) und die Wärmesenke (20) von einem Kühlmittel durchströmt werden.

7. Kraftfahrzeug (100) mit einem Kühlkreislauf (10) nach einem der Ansprüche 2 bis 6, wobei in einem vierten Betriebsmodus
- der erste Kühlstrang (11) und der vierte Kühlstrang (19) verschaltet sind, sodass die Batterie (12) und die Wärmesenke (20) von einem Kühlmittel durchströmt werden.

8. Kraftfahrzeug (100) mit einem Kühlkreislauf (10) nach einem der vorgenannten Ansprüche, wobei in einem fünften Betriebsmodus
- der zweite Kühlstrang (13) und der dritte Kühlstrang (15) verschaltet sind, sodass der Chiller (14) und der Antrieb (16) und/oder die Leistungskomponenten (17) von einem Kühlmittel durchströmt werden.

9. Kraftfahrzeug (100) mit einem Kühlkreislauf (10) nach einem der vorgenannten Ansprüche, wobei das mindestens eine Stellmittel (22, 23) mindestens ein, bevorzugt zwei, Vier-Wege-Ventile (24, 25) umfasst, und/oder wobei das mindestens eine Stellmittel (22, 23) mindestens ein Fünf-Wege-Ventil (31) umfasst, und/oder wobei das mindestens eine Stellmittel (22, 23) mindestens ein Sechs-Wege-Ventil (32) enthält.

10. Verfahren zum Betreiben des Kühlkreislaufs (10) eines Kraftfahrzeuges (100) nach einem der vorgenannten Ansprüche, wobei die Kühlstränge (11, 13, 15, 19, 33) durch Stellung des Stellmittels (22, 23) zur Umsetzung mehrerer Betriebsmodi des Kühlkreislaufs (10) verschaltet werden können, **dadurch gekennzeichnet, dass** in einem ersten Betriebsmodus der erste Kühlstrang (11) und der zweite Kühlstrang (13) verschaltet und von einem Kühlmittel durchströmt werden, und dass in einem zweiten Betriebsmodus der erste Kühlstrang (11) und der dritte Kühlstrang (15) verschaltet und von einem Kühlmittel durchströmt werden und der zweite Kühlstrang (13) nicht von dem Kühlmittel durchströmt wird.
